# EUROPÄISCHE PATENTANMELDUNG

(11) **EP 0 972 926 A2**
(43) Veröffentlichungstag der Anmeldung: **19.01.2000**
(21) Anmeldenummer: 99110339.1
(22) Anmeldetag: 28.05.1999
(51) Int. Cl.: F02D 33/02, F02B 37/007

(54) **Verfahren und Vorrichtung zum Überwachen der Funktion zweier Abgasturbolader**

(30) Priorität: 16.07.1998 DE 19832020
(71) Anmelder: ROBERT BOSCH GMBH, 70442 Stuttgart (DE)
(72) Erfinder: Lohmann, Andrea, 70196 Stuttgart (DE); Baeuerle, Michael, 71706 Markgroeningen (DE); Ries-Mueller, Klaus, 74906 Bad Rappenau (DE)

(57) **Zusammenfassung**

Für jede Zylinderbank wird eine eigene Laufunruhe-Ermittlung (25, 26) durchgeführt. Die jeweils ermittelten Laufunruhewerte werden mit einem unteren und einem oberen Schwellenwert verglichen (29, 30), wobei der obere Schwellenwert so gelegt wird, daß alle darunterliegenden Laufunruhewerte ihre Ursache nicht in Verbrennungsaussetzern haben. Ein Defekt in einem der Abgasstränge wird signalisiert (34), wenn für mindestens eine der beiden Zylinderbänke ein zwischen dem unteren und dem oberen Schwellenwert liegender Laufunruhewert ermittelt wird und die Differenz zwischen den Laufunruhewerten der beiden Zylinderbänke eine Schwelle übersteigt.

Mit diesem Verfahren kann sehr frühzeitig ein Defekt bei einem der beiden Zylinderbänke ermittelt werden.

## Beschreibung

### Stand der Technik

Aus der DE 19 513 156 C1 ist eine aus zwei Zylinderbänken bestehende Brennkraftmaschine bekannt, bei der jede Zylinderbank einen eigenen Abgasturbolader aufweist. Durch Regelung der in den Abgastrakten der beiden Zylinderbänke angeordneten Abgasturbinen wird der Ladedruck im gemeinsamen Ansaugtrakt der beiden Zylinderbänke auf einen Sollwert geregelt. Tritt nun in einem der beiden Abgastrakte ein Fehler auf, zum Beispiel ein Verstopfen des Katalysators oder ein Defekt des Ladedruckreglers oder eine Störung der Abgasturbine etc., so macht sich das durch unterschiedliche Drehzahlen der beiden Abgasturbolader bemerkbar. Die Regelschaltung wird nämlich die durch den einseitig auftretenden Fehler verursachte Regelabweichung des Ladedruck-Istwertes gegenüber dem Ladedruck-Sollwert dadurch ausgleichen, daß sie den Turbolader auf der fehlerfreien Seite hochregelt. Dabei kann die Turbolader-Drehzahl einen kritischen Wert erreichen, der zur Zerstörung desselben führt. Um in einem Fehlerfall die Zerstörung eines Turboladers auszuschließen, ist gemäß der DB 19 513 156 C1 eine Fehlererkennungseinrichtung vorgesehen, die, wenn sie einen Fehler einseitig in einem der beiden Abgasstränge erkennt, die Laderegelung abschaltet und auf eine Steuerung umschaltet. Die Steuerung ist so ausgelegt, daß der Turbolader nicht in seinen kritischen Drehzahlbereich hineinläuft. Die Fehlererkennungsschaltung erfaßt zum Beispiel Motor-Aussetzer in den beiden Zylinderbänken. Dabei wird die Häufigkeit von Motor-Aussetzern für die einzelnen Zylinderbänke bestimmt und, wenn die Häufigkeit einen vorgegebenen Grenzwert übersteigt, signalisiert sie, daß ein Fehler einseitig in einem der beiden Abgasstränge vorliegt.

Bis ein Defekt in einem der beiden Abgasstränge zu Motor-Aussetzern in einem der Zylinderbänke führt, kann eine längere Zeit vergehen, innerhalb derer die Regelschaltung einen der beiden Abgasturbolader bereits in einen kritischen Drehzahlbereich hineingeregelt hat. Der Erfindung liegt daher die Aufgabe zugrunde, ein Verfahren und eine Vorrichtung zum Überwachen der Funktion zweier Abgasturbolader, die zu zwei getrennten Zylinderbänken einer Brennkraftmaschine gehören, anzugeben, mit dem möglichst schnell ein Defekt in einem der Abgasstränge erkannt werden kann, so daß entsprechende Schutzmaßnahmen für die Turbolader eingeleitet werden können.

### Vorteile der Erfindung

Die genannte Aufgabe wird mit den Merkmalen der Ansprüche 1 bzw. 5 dadurch gelöst, daß für jede Zylinderbank eine Laufunruhe-Ermittlung durchgeführt wird, daß die jeweils ermittelten Laufunruhewerte mit einem unteren und einem oberen Schwellenwert verglichen werden, wobei der obere Schwellenwert so geregelt wird, daß alle darunterliegenden Laufunruhewerte ihre Ursache nicht in Verbrennungsaussetzern haben. Ein Defekt im Abgasstrang wird dann signalisiert, wenn für mindestens eine der beiden Zylinderbänke ein zwischen dem unteren und dem oberen Schwellenwert liegender Laufunruhewert ermittelt wird und die Differenz zwischen den Laufunruhewerten der beiden Zylinderbänke eine Schwelle übersteigt. Mit diesem Verfahren bzw. einer dieses Verfahren durchführenden Vorrichtung wird ein Defekt schon längst bevor es zu Motor-Aussetzern kommt rechtzeitig erkannt.

Zweckmäßige Weiterbildungen der Erfindung gehen aus den Unteransprüchen hervor.

Anstatt die absoluten Laufunruhenwerte einer Schwellenwertentscheidung zu unterziehen, können auch über mehrere Zündtakte gemittelte Laufunruhewerte der Schwellenwertentscheidung zugeführt werden.

Mit dem erfindungsgemäßen Verfahren ist es auch möglich, zu entscheiden, welcher der beiden Turbolader defekt ist. Demnach wird nämlich derjenige Turbolader als defekt eingestuft, der zu einer Zylinderbank gehört, für die ein zwischen dem unteren und dem oberen Schwellenwert liegender Laufunruhe-Wert ermittelt worden ist, der größer ist als ein für die andere Zylinderbank ermittelter Laufunruhewert.

Eine Plausibilitätsprüfung für einen erkannten Defekt in einem Abgasstrang kann dadurch erfolgen, daß die Signale von in den Abgaskanälen der beiden Zylinderbänke angeordneten Lambdasonden miteinander verglichen werden und daß eine einen vorgegebenen Grenzwert überschreitende Ablage zwischen den beiden Lambdasondensignalen als Plausibilitätskriterium herangezogen wird.

### Beschreibung eines Ausführungsbeispiels

Anhand eines in der Zeichnung dargestellen Ausführungsbeispiels wird nachfolgend die Erfindung näher erläutert. Es zeigen:
- Figur 1:: Ein Blockschaltbild einer Brennkraftmaschine mit zwei Abgasturboladern und
- Figur 2:: Ein Ablaufdiagramm für ein Verfahren zum Überwachen der Funktion der beiden Abgasturbolader.

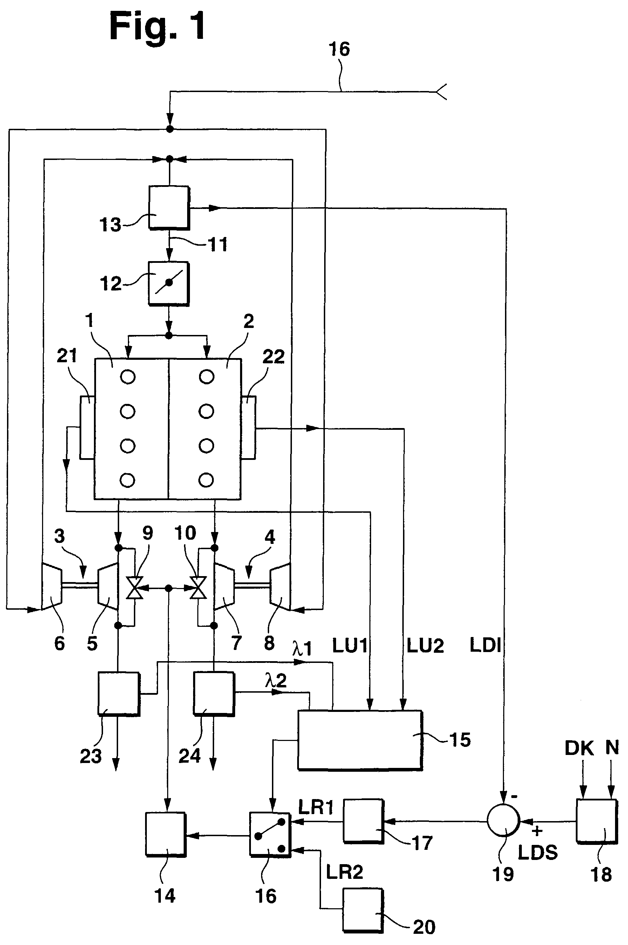

In der Figur 1 ist eine Brennkraftmaschine mit zwei Zylinderbänken 1 und 2 dargestellt. Jede dieser beiden Zylinderbänke 1 und 2 ist mit einem Abgasturbolader 3 und 4 ausgestattet. Der Abgasturbolader 3 weist eine Turbine 5 im Abgaskanal der ersten Zylinderbank 1 und einen damit gekoppelten Verdichter 6 im Ansaugtrakt auf. In gleicher Weise ist eine Turbine 7 des zweiten Abgasturboladers 4 im Abgaskanal der zweiten Zylinderbank 2 und ein damit gekoppelter Verdichter 8 im Ansaugtrakt angeordnet. Die Turbinen 5 und 7 der beiden Turbolader 3 und 4 sind jeweils in bekannter Weise mit einem Bypass-Ventile 9 und 10 ausgestattet. Über diese Bypass-Ventile 9 und 10 besteht die Möglichkeit, den von einem jeden Turbolader 3, 4 erzeugten Ladedruck auf einen gewünschten Wert zu regeln. Die Verdichter 6 und 8 der beiden Turbolader 3 und 4 speisen ihre Ladeluft in einen gemeinsamen Ansaugkanal 11 ein, in dem sich eine Drosselklappe 12 und ein Luftdrucksensor 13 für die Messung des Ladedrucks befinden. Am Ausgang der Drosselklappe 12 verzweigt sich der Ansaugkanal 11 auf die beiden Zylinderbänke 1 und 2. Es kann aber auch für jede Zylinderbank ein eigener Ansaugkanal mit einer eigenen Drosselklappe und einem Ladedrucksensor vorhanden sein.

Ein Stellglied 14, zum Beispiel ein Taktventil, steuert die beiden Bypass-Ventile 9 und 10 der Turbolader 3 und 4 gleichzeitig an. Der Ladedruck der beiden Turbolader 3 und 4 läßt sich anstelle der Bypass-Ventile 9 und 10 auch über die Geometrie der Turbinen 5, 6 regeln.

Es ist eine Fehlererkennungseinrichtung 15 vorhanden, welche die Funktion der beiden Abgasturbolader überwacht und erkennt, ob bei einem der beiden Turbolader zum Beispiel durch einen verstopften Katalysator ein Defekt auftritt. Bei fehlerfreier Funktion beider Abgasturbolader 3 und 4 bringt die Fehlererkennungseinrichtung 15 einen Schalter 16 in eine solche Stellung, daß ein Ladedruckregler 17 an den Eingang des Stellgliedes 14 durchgeschaltet ist. Der Ladedruck der beiden Turbolader 3 und 4 wird in diesem fehlerfreien Fall also von einem geschlossenen Regelkreis mit dem Regler 17 (z.B. PDI-Regler) geregelt. Der Regler 17 erhält als Eingangssignal die Ablage zwischen einem Ladedruck-Istwert LDI, der vom Luftdrucksensor 13 gemessen wird, und einem Ladedruck-Sollwert LDS, der von einem Sollwertgeber 18 vorgegeben wird. Der Sollwertgeber 18 ist ein von der Drosselklappenstellung DK (oder der Fahrpedalstellung) und der Motordrehzahl N abhängiges Kennfeld. In dem Verknüpfungspunkt 19 wird die Ablage zwischen dem Ladedruck-Istwert LDI und dem Ladedruck-Sollwert LDS ermittelt.

Hat nun die Fehlererkennungseinrichtung 15 einen Fehler erfaßt, so bringt sie den Schalter 16 in eine zweite Stellung, so daß anstelle des Reglers 17 eine Steuerung oder ein anderer Regler 20 an den Eingang des Stellgliedes 14 durchgeschaltet ist. Diese Steuerung bzw. zweite Regelung 20 verhindern, daß der eine noch fehlerfrei funktionierende Turbolader in seinen kritischen Drehzahlbereich hochfährt.

Das Fehlererkennungsverfahren in der Einrichtung 15 basiert auf der Auswertung der von den einzelnen Zylinderbänken 1 und 2 ermittelten Laufunruhewerte LU1 und LU2. In der Figur 1 sind an jeder Zylinderbank 1 und 2 Blöcke 21 und 22 angedeutet, in denen die Laufunruhewerte LU1 und LU2 ermittelt werden. Auf die detailierte Beschreibung eines Verfahrens zur Erfassung der Laufunruhe eines Motors wird hier verzichtet, da es eine Reihe aus dem Stand der Technik (z.B. DE 41 38 765 A1) bekannter Verfahren gibt, die hier anwendbar sind. Für die Fehlererkennung können auch noch die Ausgangssignale λ1 und λ2 von in den einzelnen Abgaskanälen befindlichen Lambdasonden 23 und 24 in der Fehlererkennungseinrichtung 25 verarbeitet werden.

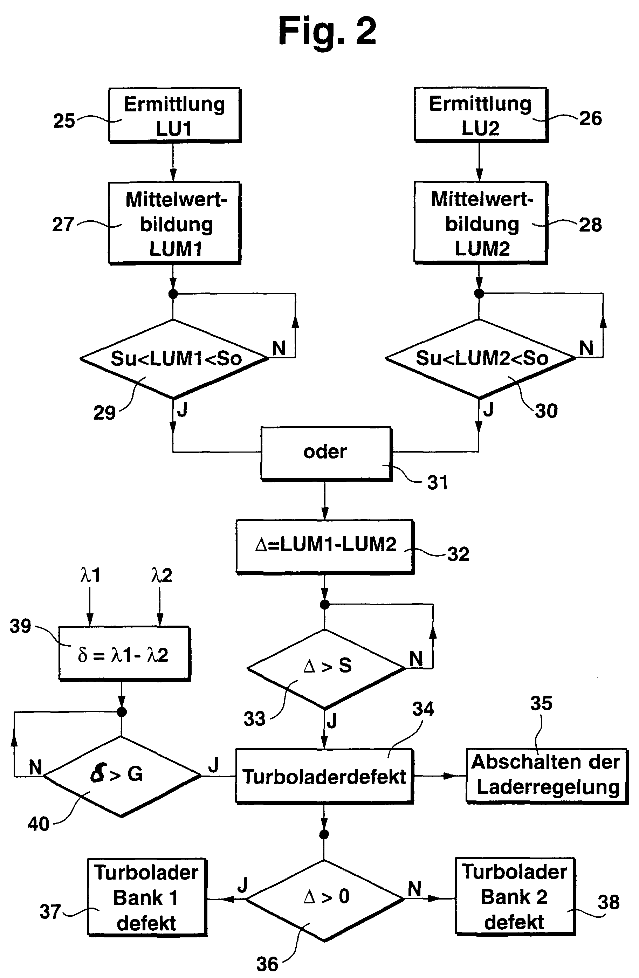

Anhand des in der Figur 2 dargestellten Ablaufdiagramms wird nachfolgend das in der Fehlererkennungseinrichtung 15 ablaufende Verfahren zum Erfassen eines Defekts in einem Abgasstrang näher beschrieben.

In den Verfahrensschritten 25 und 26 werden zunächst die Laufunruhen LU1 und LU2 für jede der beiden Zylinderbänke getrennt ermittelt. Die Laufunruhe einer Zylinderbank weist nämlich darauf hin, daß der zugehörige Turbolader oder eine andere Einrichtung in einem Abgasstrang defekt ist (im Folgenden wird in diesem Zusammenhang nur noch von Defekt gesprochen). Denn ein Defekt erzeugt einen Abgasgegendruck im Motor, der eine Veränderung der Zylinderfüllung bewirkt, die sich als Laufunruhe bemerkbar macht. In den nächsten Verfahrensschritten 27 und 28 wird ein für jede Zylinderbank über mehrere Zündtakte gemittelter Laufunruhewert LUM1 und LUM2 gebildet. Das weitere Verfahren wird nun mit den gemittelten Laufunruhewerten LUM1 und LUM2 durchgeführt. Es kann aber auch mit den konkret gemessenen und nicht gemittelten Laufunruhewerten LU1 und LU2 weitergeführt werden.

In den folgenden Verfahrensschritten 29 und 30 werden die beiden gemittelten Laufunruhewerte LUM1 und LUM2 für die beiden Zylinderbänke einer Schwellenwertentscheidung unterzogen. Aus der Schwellenwertentscheidung wird nur dann eine Information an eine ODER-Verknüpfung 31 weitergegeben, wenn der mittlere Laufunruhe-Wert LUM1 bzw. LUM2 größer als ein unterer Schwellenwert Su und kleiner als ein oberer Schwellenwert So ist. Der untere Schwellenwert Su ist so gelegt, daß man davon ausgehen kann, daß eine ihn übersteigende Laufunruhe auch tatsächlich auf einen Defekt zurückzuführen ist. Der obere Schwellenwert So wird so gelegt, daß alle darunterliegenden Laufunruhewerte ihre Ursache noch nicht in Verbrennungsaussetzern haben. Durch diese Schwellenwertentscheidungen 29 und 30 soll erreicht werden, daß nicht erst solche Laufunruhen, die auf Zündaussetzer zurückzuführen sind, mit einem Defekt in Verbindung gebracht werden. Mit den beschriebenen Verfahren werden also bereits geringere Laufunruhen erfaßt und daraus ein Defekt abgeleitet. Damit wird ein Defekt viel früher erfaßt, als wenn die Entscheidung auf Vorliegen eines Defektes erst von Laufunruhen durch Verbrennungsaussetzer abhängig gemacht würde.

Sobald mindestens einer der beiden mittleren Laufunruhe-Werte LUM1 bzw. LUM2 innerhalb der beiden Schwellen Su und So liegt, wird nach der ODER-Verknüpfung 31 im darauffolgenden Verfahrensschritt 32 die Differenz Δ zwischen den beiden mittleren Laufunruhewerten LUM1 und LUM2 gebildet. Im Verfahrensschritt 33 wird überprüft, ob diese Differenz Δ eine vorgegebene Schwelle S übersteigt. Erst wenn das der Fall ist, also die mittleren Laufunruhe-Werte LUM1 und LUM2 der beiden Zylinderbänke sich deutlich voneinander unterscheiden, wird im Verfahrensschritt 34 auf einen Defekt entschieden. Die Differenzbildung zwischen den beiden mittleren Laufunruhe-Werten LUM1 und LUM2 läßt mit Sicherheit darauf schließen, daß ein Defekt in einem der beiden Abgasstränge vorliegen muß. Ist nun im Verfahrensschritt 34 auf einen Defekt entschieden worden, so wird, wie bereits im Zusammenhang mit Figur 1 beschrieben, im Verfahrensschritt 35 ein Abschalten der normalen Laderegelung veranlaßt und gleichzeitig ein Umschalten auf eine andere Regelung bzw. Steuerung.

Aufgrund der Differenzbildung Δ zwischen den beiden mittleren Laufunruhe-Werten LUM1 und LUM2 wird erkennbar, welcher der beiden Turbolader defekt sein muß. Dazu wird im Verfahrensschritt 36 ermittelt, ob die Differenz Δ größer oder kleiner 0 ist. Ist die Differenz Δ größer 0, weist die Zylinderbank 1 eine größere mittlere Laufunruhe LUM1 auf als die Zylinderbank 2. Das wiederum bedeutet, daß in der Zylinderbank 1 ein größerer Abgasgegendruck aufgrund eines Turbolader-Defekts entstanden ist. Anderenfalls, wenn die Differenz Δ kleiner 0 ist, muß ein Defekt des Turboladers der Zylinderbank 2 vorliegen. So wird bei einer Differenz Δ größer 0 im Schritt 37 auf Defekt des Turboladers der Zylinderbank 1 und bei einer Differenz Δ kleiner 0 im Schritt 38 auf einen Defekt des Turboladers der Zylinderbank 2 entschieden.

Die Entscheidung im Verfahrensschritt 34 auf einen Defekt kann durch eine Plausiblitätsprüfung noch zusätzlich abgesichert werden. Diese Plausibilitätsprüfung besteht darin, daß die Ausgangssignale λ1 und λ2 der in den Abgaskanälen der beiden Zylinderbänke befindlichen Lamdba-Sonden 23 und 24 im Verfahrensschritt 39 einer Differenzbildung unterzogen werden. Im Verfahrensschritt 40 wird überprüft, ob eine gewisse Asymmetrie zwischen den Lambdasondensignalen λ1 und λ2 besteht, d.h. ob die Differenz δ größer als ein Grenzwert G ist. Wenn das der Fall ist, wird diese Information bei der Entscheidung auf einen Defekt berücksichtigt.

## Patentansprüche

1. Verfahren zum Überwachen der Funktion zweier Abgasturbolader, die zu zwei getrennten Zylinderbänken einer Brennkraftmaschine gehören, dadurch gekennzeichnet, daß für jede Zylinderbank (1, 2) eine Laufunruhe-Ermittlung (25, 26) durchgeführt wird, daß die jeweils ermittelten Laufunruhewerte mit einem unteren und einem oberen Schwellenwert verglichen werden (29, 30), wobei der obere Schwellenwert so gelegt wird, daß alle darunterliegenden Laufunruhewerte ihre Ursache nicht in Verbrennungsaussetzern haben, und daß ein Defekt in einem Abgasstrang signalisiert wird (34), wenn für mindestens eine der beiden Zylinderbänke (1, 2) ein zwischen dem unteren und dem oberen Schwellenwert liegender Laufunruhewert ermittelt wird und die Differenz zwischen den Laufunruhewerten der beiden Zylinderbänke eine Schwelle übersteigt (32, 33).

2. Verfahren nach Anspruch 1, dadurch gekennzeichnet, daß für jede Zylinderbank (1, 2) ein über mehrere Zündtakte gemittelter Laufunruhewert bestimmt wird (27, 28).

3. Verfahren nach Anspruch 1, dadurch gekennzeichnet, daß derjenige Abgasstrang als defekt eingestuft wird, der zu einer Zylinderbank (1, 2) gehört, für die ein zwischen dem unteren und dem oberen Schwellenwert liegender Laufunruhewert ermittelt worden ist, der größer ist als ein für die andere Zylinderbank ermittelter Laufunruhewert.

4. Verfahren nach Anspruch 1, dadurch gekennzeichnet, daß die Signale (λ1, λ2) von in den Abgaskanälen der beiden Zylinderbänke (1, 2) angeordneten Lambdasonden (23, 24) miteinander verglichen werden und daß eine einen vorgegebenen Grenzwerte überschreitende Ablage (39, 40) zwischen den beiden Lambdasondensignalen (λ1, λ2) als Plausibilitätskriterium für einen erkannten Defekt in einem der beiden Abgasstränge herangezogen wird.

5. Vorrichtung zum Überwachen der Funktion zweier Abgasturbolader, die zu zwei getrennten Zylinderbänken einer Brennkraftmaschine gehören, dadurch gekennzeichnet, daß Mittel (21, 22) vorhanden sind, welche die Laufunruhen (LU1, LU2) beider Zylinderbänke (1, 2) getrennt ermitteln, daß Schwellenwertentscheider die jeweils ermittelten Laufunruhewerte mit einem unteren und einem oberen Schwellenwert vergleichen, wobei der obere Schwellenwert so gelegt ist, daß alle darunter liegenden Laufunruhewerte ihre Ursache nicht in Verbrennungsaussetzern haben, und daß Komparatormittel einen zwischen dem unteren und dem oberen Schwellenwert liegenden Laufunruhewert eines der beiden Zylinderbänke (1, 2) mit dem für die andere Zylinderbank ermittelte Laufunruhewert vergleichen und einen Defekt in einem Abgasstrang signalisieren, wenn die Differenz zwischen beiden Laufunruhewerten eine Schwelle übersteigt.
